# EUROPÄISCHE PATENTANMELDUNG

(11) **EP 4 510 248 A2**
(43) Veröffentlichungstag der Anmeldung: **19.02.2025**
(21) Anmeldenummer: 24193003.1
(22) Anmeldetag: 06.08.2024
(51) Int. Cl.: H01M 4/90, H01M 8/12

(54) **FESTOXIDZELLE MIT NICKELFREIER BRENNSTOFFELEKTRODE**

(30) Priorität: 17.08.2023 DE 102023207910
(71) Anmelder: Forschungszentrum Jülich GmbH, 52425 Jülich (DE)
(72) Erfinder: UECKER, Jan, 52070 Aachen (DE); VIBHU, Vaibhav, 52428 Jülich (DE); UNACHUKWU, Ifeanyichukwu Daniel, 52428 Jülich (DE); DE HAART, Lambertus Gerardus Johannes, 6291 EA Vaals (NL); EICHEL, Rüdiger-A., 52428 Jülich (DE)
(74) Vertreter: Gille Hrabal Partnerschaftsgesellschaft mbB Patentanwälte

(57) **Zusammenfassung**

Die Erfindung betrifft eine Festoxidzelle mit einem Elektrolyten (2), wobei auf gegenüberliegenden Seiten des Elektrolyten (2) gasdurchlässige elektrische Leiter als Anode (1) und Kathode (3) angebracht sind, dadurch gekennzeichnet, dass die Anode (1) aus Ce₁₋ₓMₓO_{2-δ} mit M = Praseodym (Pr) und/oder Lanthan (La) besteht oder Ce₁₋ₓMₓO_{2-δ} mit M = Praseodym (Pr) und/oder Lanthan (La) umfasst.

## Beschreibung

Die Erfindung betrifft eine Festoxidzelle (SOC), zu denen die Festoxidbrennstoffzellen (SOFCs), die Festoxidelektrolysezellen (SOECs) und die reversiblen Festoxidzellen (RSOCs) gehören. SOCs sind elektrochemische Bauelemente, die als Energiespeicher oder Energieumwandlungsgeräte fungieren können. Die Erfindung betrifft außerdem ein Verfahren für den Betrieb der Festoxidzelle.

Eine typische SOC besteht aus einem gasdichten Elektrolyten, der von zwei porösen Elektroden, nämlich der Brennstoffelektrode und der Luft-/Sauerstoffelektrode, umschlossen wird. Im Elektrolysebetrieb kann H₂O, CO₂ oder eine Gasmischung aus beiden in H₂, CO oder Synthesegas umgewandelt werden. Es kann also elektrische Energie in chemische Energie umgewandelt werden. Im SOFC-Modus kann die gespeicherte chemische Energie zurück in elektrische Energie umgewandelt werden.

Es können bei der Benutzung der SOC-Technologie eine Vielzahl von Gasen, wie H₂, H₂O, CO, CO₂, Gase auf Kohlenwasserstoffbasis usw. sowohl im Elektrolyse- als auch im Brennstoffzellenbetrieb verwendet werden.

Es ist Aufgabe der vorliegenden Erfindung, eine SOC weiterzuentwickeln. Insbesondere soll eine hohe Lebensdauer der Brennstoffelektroden in SOEC- und SOFC-Systemen erreicht werden.

Die Aufgabe wird durch eine Festoxidzelle mit den Merkmalen des ersten Anspruchs gelöst. Ein Verfahren zur Herstellung umfasst die Merkmale des nebengeordneten Anspruchs. Die abhängigen Ansprüche betreffend vorteilhafte Ausgestaltungen.

Zur Lösung der Aufgabe weist eine Festoxidzelle einen Elektrolyten auf, wobei sich auf gegenüberliegenden Seiten des Elektrolyten gasdurchlässige elektrische Leiter als Anode und Kathode befinden. Kathode und/oder Anode können mittelbar oder unmittelbar an dem Elektrolyten angebracht sein. Anode und Kathode können außerdem vorteilhaft ionische Leiter sein.

Die Brennstoffelektrode kann aus Ce₁₋ₓMₓO_{2-δ} mit M = Praseodym (Pr) und/oder Lanthan (La) und/oder Samarium (Sm) und/oder Neodym (Nd) bestehen oder Ce₁₋ₓMₓO_{2-δ} mit M = Praseodym (Pr) und/oder Lanthan (La) und/oder Samarium (Sm) und/oder Neodym (Nd) umfassen.

Die Anode ist die Elektrode, die während des Betriebs Elektronen aufnimmt, d.h. an dieser Elektrode findet eine Oxidationsreaktion von Bestandteilen des Gases statt. Die Anode ist bei einem Brennstoffzellenbetrieb die Elektrode, die für die Zuführung von Brennstoff während eines Brennstoffzellenbetriebs bestimmt und geeignet ist. Beispielsweise kann während des Brennstoffzellenbetriebs Wasserstoff der Anode zugeführt werden. Wasserstoffmoleküle werden oxidiert und geben dann ihre Elektronen an die Anode ab. Die Anode wird daher auch Brennstoffelektrode genannt. Der Kathode kann während des Brennstoffzellenbetriebs ein Sauerstoff haltiges Gas wie Luft oder reiner Sauerstoff zugeführt werden. An der Kathode findet eine Reduktionsreaktion von Sauerstoff statt, d.h. die Sauerstoffmoleküle nehmen aus der Kathode Elektronen auf.

Wird die Festoxidzelle als Elektrolysezelle betrieben, dann ist die Kathode die Brennstoffelektrode. Der Kathode kann beispielsweise Wasserdampf zugeführt werden, um Wasserstoff erzeugen zu können.

Die Brennstoffelektrode kann aus nur einer Schicht bestehen. Auch die andere Elektrode kann aus nur einer Schicht bestehen, also aus nur einem Material. Die Brennstoffelektrode und/oder die andere Elektrode können aber auch mehr als eine Schicht umfassen. Schichten einer Elektrode können aus unterschiedlichen Materialien bestehen. Die Brennstoffelektrode und/oder die andere Elektrode können jeweils eine Schicht umfassen, die elektrisch leitet und die katalytisch aktiv ist. Es findet in der katalytisch aktiven Schicht eine elektrochemische Reaktion statt. Beispielsweise wird Wasserdampf in Wasserstoff unter Aufnahme von Elektronen umgewandelt.

Außerdem kann die Elektrode eine poröse Schicht umfassen, die vorteilhaft nicht katalytisch aktiv ist. Die katalytisch aktive Schicht kann sich vorteilhaft zwischen der Elektrolytschicht und der nicht katalytisch aktiven Schicht der Elektrode befinden. Es kann so der Materialeinsatz und der Massentransport optimiert werden.

Eine Elektrode kann eine Stromsammlerschicht umfassen. Die Stromsammlerschicht kann eine dritte Schicht einer Elektrode sein. Die Stromsammlerschicht kann sich auf der Außenseite der Elektrode befinden, also maximal entfernt von der Elektrolytschicht. Die Stromsammlerschicht kann beispielsweise aus Gold, Platin oder Nickel bestehen.

Elektroden können nicht nur elektrisch leitend, sondern vorzugsweise auch ionisch leitend sein. Das Material einer Elektrode, die sowohl elektrisch als auch ionisch leitend ist, wird auch MIEC genannt. Das Material kann beispielsweise ein Cermet sein. Das Material kann beispielsweise zwei Phasen umfassen, und zwar eine elektrisch leitende Phase und eine ionisch leitende Phase. Das Material kann beispielsweise ein (misch)leitendes Oxid sein.

Das Symbol "δ" steht für ein Sauerstoffdefizit in dem Material. Es kann also einen Sauerstoffmangel in der Kristallstruktur geben. Dies bedeutet, dass das Material nicht die maximale Anzahl von Sauerstoffatomen enthält, die normalerweise in der chemischen Formel vorgesehen sind. Dies kann beispielsweise in Festoxidbrennstoffzellen (Solid Oxide Fuel Cells, SOFCs) von Vorteil sein, da der Sauerstoff sich bei einem Sauerstoffdefizit leicht durch das Material hindurchbewegen kann, um die Elektrochemie in der Brennstoffzelle aufrechtzuerhalten.

Durch einen möglichen Verzicht auf Nickel bei der Brennstoffelektrode kann eine hohe Stabilität erzielt werden. Die Langzeitstabilität für die Verwendung als Brennstoffelektrode für SOFC, RSOC und SOEC Systeme kann so im Vergleich zu konventionellen Systemen deutlich verbessert werden. Dies gilt für unterschiedliche Gaseinlasszusammensetzungen wie kohlenwasserstoffhaltige Gase, H₂, H₂O, CO und CO₂. Es hat sich gezeigt, dass eine hohe Elektrodenleistung im Vergleich zu üblichen Elektrodenmaterialien bei der Dampfelektrolyse, bei der CO-Elektrolyse und CO₂ Elektrolyse erzielt werden kann. Es ist möglich, dass der thermische Ausdehnungskoeffizient zu den anderen verwendeten Materialien passt, um eine Delamination der Brennstoffelektrode zu vermeiden.

x = 0 bis 0.3 mit x>0 hat sich als besonders geeignet herausgestellt, um eine langzeitstabile, leistungsfähige Festoxidzelle erhalten zu können. Die Brennstoffelektrode oder zumindest eine Schicht der Brennstoffelektrode bestehen besonders bevorzugt aus Pr_{0.1}Ce_{0.9}O_{2-δ}, Pr_{0.3}Ce_{0.7}O_{2-δ} oder Pr_{0.05}La_{0.05}Ce_{0.9}O_{2-δ}, um eine langzeitstabile, leistungsfähige Festoxidzelle erhalten zu können.

Es ist möglich, dass in der Brennstoffelektrode Kobalt, Titanium, Platin, Kupfer und/oder Nickel infiltriert sind. Es ist möglich, dass die Brennstoffelektrode mit Kobalt, Titan, Platin, Kupfer und/oder Nickel dotiert ist.

Der Anteil an Kobalt, Titan, Platin, Kupfer und/oder Nickel in der Brennstoffelektrode kann mehr als 1 Gew.-% oder mehr als 2 Gew.-% und/oder weniger 5 Gew.-% oder weniger als 10 Gew.-%Ab betragen. Ab 1 Gew.-% oder mehr als 2 Gew.-% ergeben sich deutliche technische Vorteile. Ab 5 Gew.-% oder ab 10 Gew.-% werden keine deutlichen technischen Vorteile durch den erhöhten Materialeinsatz mehr erzielt. Insbesondere der Anteil an Nickel kann daher gering sein im Vergleich zum Nickelgehalt von üblichen Nickel haltigen Brennstoffelektroden. Es können so elektrochemische Eigenschaften einer Brennstoffelektrode weiter verbessert werden ohne die Langzeitstabilität zu beeinflussen.

Zunächst eine Brennstoffelektrode herzustellen, die kein Nickel aufweist und bei der erst in einem zweiten Schritt Nickel eingebracht wird, stellt eine eigenständige Erfindung zur Lösung der Aufgabe dar. Eine so hergestellte Brennstoffelektrode ist langzeitstabil und leistungsfähig. Es kann beispielsweise eine Brennstoffelektrode oder eine Schicht einer Brennstoffelektrode aus Ce₁₋ₓGdₓO_{2-δ} hergestellt worden sein. Anschließend wird die aus Ce₁₋ₓGdₓO_{2-δ} hergestellte Brennstoffelektrode mit Nickel dotiert oder infiltriert. Der Anteil an Nickel an danach bei weniger als 5 Gew.-% liegen.

Zwischen der Brennstoffelektrode und dem Elektrolyten kann sich zur Verbesserung von Eigenschaften der Festoxidzelle eine Barriere befinden. Die Barriere kann beispielsweise dotiertes Ceroxid aufweisen oder daraus bestehen. Die Barriere kann mit Gadolinium dotiertes Ceroxid (GDC) oder mit Samariumoxid dotiertes Ceroxid (SmDC) aufweisen oder daraus bestehen. Die Barriere ist grundsätzlich eine Schicht, die sich zwischen zwei anderen Schichten befindet. Die Dotierung kann wenigstens 10 Gew.-% und/oder bis 20 Gew.-% betragen.

Der Elektrolyt kann aus einem gasdichten, keramischen Werkstoff bestehen, der Sauerstoffionen zumindest bei hinreichend hohen Temperaturen wie zum Beispiel ab 600°C leiten kann und für Elektronen isolierend wirkt.

Der Elektrolyt kann aus Yttrium-stabilisiertem Zirconiumoxid (YSZ) oder aus Strontium und Magnesium dotiertes Lanthangalliumoxid (LSGM) oder aus mit Gadolinium dotiertes Ceroxid (GDC) bestehen oder diese Materialien umfassen.

Die andere Elektrode oder zumindest eine Schicht der anderen Elektrode können aus einem Perowskit-Verbundwerkstoff bestehen. Die andere Elektrode kann aus Lanthan-Strontium-Manganit, ((La,Sr)MnO₃ bzw. LSM)) bestehen oder LSM umfassen. Die andere Elektrode kann aus Lanthan-Strontium-Kobaltit, ((La,Sr)CoO₃ bzw. LSC) bestehen oder LSC umfassen. Die andere Elektrode kann aus Lanthan-Strontium-Eisen, ((La,Sr)FeO₃ bzw. LSF) bestehen oder LSF umfassen. Die andere Elektrode kann aus Samarium-Strontium-Kobaltit ((Sm,Sr)CoO₃ bzw. SSC) bestehen oder SSC umfassen. Mit "anderer Elektrode" ist die Elektrode gemeint, der im Brennstoffzellenbetrieb Sauerstoff zugeführt wird bzw. aus der Sauerstoff im Elektrolysebetrieb austritt.

Es kann eine Trennschicht zwischen dem Elektrolyten und der anderen Elektrode vorhanden sein. Die Trennschicht kann beispielsweise eine Cerverbindung zwischen dem Elektrolyten und der Brennstoffelektrode sein.

Die Probleme der Langzeitstabilität in SOC Systemen können durch die Implementierung einer elektronisch und ionisch leitenden Brennstoffelektrode aus Ce₁₋ₓMₓO_{2-δ} behoben oder zumindest verringert werden. Ce₁₋ₓMₓO_{2-δ} kann elektronisch sowie ionisch unter oxidierenden sowie reduzierenden Bedingungen leiten.

Für Festoxidzellen geeignete Materialien können so ausgewählt werden, dass thermische Ausdehnungskoeffizienten ähnlich sind, um weiter verbessert eine gute Langzeitstabilität zu erzielen. YZS, LSGM oder GDC weisen hinreichend ähnliche thermische Ausdehnungskoeffizienten wie das Material Ce₁₋ₓMₓO_{2-δ} mit M = Praseodym (Pr) und/oder Lanthan (La) und/oder Samarium (Sm) und/oder Neodym (Nd) der Brennstoffelektrode auf. An eine aus Ce₁₋ₓMₓO_{2-δ} mit M = Praseodym (Pr) und/oder Lanthan (La) und/oder Samarium (Sm) und/oder Neodym (Nd) gebildete, gasdurchlässige Schicht kann daher an eine Schicht aus YZS, LSGM oder GDC angrenzen, um eine langzeitstabile Festoxidzelle erhalten zu können.

Die Brennstoffelektrode ist für verschiedene Gaskompositionen geeignet, so zum Beispiel für H₂/H₂O oder CO/CO₂ Mixturen.

Die Festoxidzelle wird in der Regel im Temperaturbereich von 600°C bis 1000°C oder 650°C bis 900°C betrieben.

Die Festoxidzelle kann plattenförmig sein. Anode, Elektrolyt und Kathode können dann wie ebene Platten geformt sein. An die Anode kann ein Anodenraum grenzen, der von einem an die Kathode grenzenden Kathodenraum getrennt sein kann. Der Anodenraum kann einen Einlass und einen Auslass für Gas aufweisen. Der Kathodenraum kann einen Einlass und einen Auslass für Gas aufweisen. Während des Brennstoffzellenbetriebs kann in den Anodenraum ein Brenngas wie Wasserstoff eingeleitet werden. Das Brenngas kann durch den Anodenraum hindurch entlang der Anode geleitet werden. Während des Brennstoffzellenbetriebs kann in den Kathodenraum ein sauerstoffhaltiges Gas wie Luft oder Sauerstoff eingeleitet werden. Beispielsweise Luft oder Sauerstoff können dann durch den Kathodenraum hindurch entlang der Kathode geleitet werden.

Ein zum Beispiel plattenförmiger Interkonnektor kann für ein elektrisches Verbinden von zwei plattenförmigen Festoxidzellen vorhanden sein. Ein Interkonnektor ist ein elektrisch leitendes Verbindungsteil, das aus Metall bestehen kann.

Die Festoxidzelle kann röhrenförmig sein. Beispielsweise kann eine Elektrode ein Rohr sein. Die Außenseite dieser Elektrode kann mit dem Elektrolyten beschichten sein. Die Außenseite des Elektrolyten kann mit der anderen, dann außenliegenden Elektrode beschichtet sein. Ein elektrisch leitender Interkonnektor kann mit der röhrenförmigen, innenliegenden Elektrode verbunden und durch die Beschichtungen hindurch nach außen geführt sein. Der Interkonnektor ist dann von der anderen, außenliegenden Elektrode elektrisch getrennt und berührt die außenliegende Elektrode folglich nicht.

Die Brennstoffelektrode kann durch Sintern im Hochtemperaturofen hergestellt werden. Zuvor kann das Elektrodenmaterial in Pulverform beispielsweise durch das unten beschriebene Citrat-Nitrat Verfahren aus seinen einzelnen Bestandteilen hergestellt werden. Anschließend kann das Elektrodenmaterial kalziniert werden. Aus dem Elektrodenpulver kann mit organischen Löse- und Bindemitteln eine Elektrodenpaste hergestellt werden, die z.B. im Siebdruckverfahren verwendet werden kann. Die Elektrodenpaste kann entweder direkt auf den Festoxidelektrolyten aufgetragen oder beispielsweise auf eine zusätzliche Barriereschicht, die z.B. aus GDC bestehen kann. Die Brennstoffelektrode wird bei hoher Temperatur (z.B. 1400°C oder 1450°C für 4 h) im Hochtemperaturofen gesintert. Teilweise kann es bei niedrigeren Sintertemperaturen zu schlechteren Leistungen und/oder Delaminierung der Brennstoffelektrode kommen.

Es kann beispielsweise danach ein variierbares Luftelektrodenmaterial bzw. Kathodenmaterial z.B. Pt, LSCF oder LSCF-GDC auf die andere Seite des Elektrolyten aufgetragen werden. Es kann zwischen der dadurch hergestellten anderen Elektrode (Luftelektrode) und dem Festoxidelektrolyten eine zusätzliche Barriereschicht zum Beispiel aus GDC vorgesehen werden. Es kann in einem letzten Schritt eine Stromsammelschicht aus z.B. Gold auf die Brennstoffelektrode aufgetragen werden. Es kann danach ebenfalls gesintert werden. Die so produzierten SOCs können in größeren SOC Systemen (Stacks) verwendet werden. Ein Stack besteht aus vielen Einheiten von SOCs, die untereinander durch Interkonnektoren kontaktiert sind.

### Beispiel 1: Pr_{0.05}La_{0.05}Ce_{0.9}O_{2-δ} Brennstoffelektrode mit GDC Barriereschicht

1.1 Synthese des Pulvers: Das Material wurde mithilfe des nun beschriebenen Citratnitratverfahrens synthetisiert. Ceriumnitrat (Ce(NO₃)₃.6H₂O mit einem Reinheitsgrad von 99.99%, Aldrich), Lanthannitrat (La(NO₃)₃.6H₂O mit einem Reinheitsgrad von 99.99%, Alfa Aesar) und Praseodymnitrat (Pr(NO₃)₃.6H₂O mit einem Reinheitsgrad 99.9%) wurden als Ausgangsstoffe verwendet. Die Ausgangsstoffe stammten von der Firma Sigma-Aldrich. Wasserfreie Zitronensäure (C₆H₈O₇) diente als Brennstoff für ein nachfolgend beschriebenes Entzünden. Die entsprechenden Vorstufen wurden in deionisiertem Wasser vorgelöst und anschließend wurde Zitronensäure zugegeben und unter Rühren bei Raumtemperatur gelöst. Das Molverhältnis von Gesamtmetallionen zu Zitronensäure betrug 1:1:1. Während des Erhitzens dieser Mischung auf einer Heizplatte bei 80°C wurden das überschüssige Wasser und die Nitratgase entfernt, sodass sich ein zähflüssiges Gel bildete, das später in einen hellbraunen Schaum überging. Beim weiteren Erhitzen auf 150°C entzündete sich der Schaum aufgrund der Zitronensäure selbst, sodass ein Pulver zurückblieb. Das Pulver wurde anschließend 3 Stunden lang bei 600°C kalziniert, um eine reine Phase zu erhalten.

1.2 Herstellung der Einzelzelle: Das nach 1.1 hergestellte Pulver des Elektrodenmaterials wurde mit α-Terpineol und Ethylcellulose kombiniert, um eine geeignete Siebdruckpaste herzustellen. Anschließend wurde die Paste mit einer Planetenmühle homogenisiert. Die elektrolytgestützten Einzelzellen wurden unter Verwendung eines handelsüblichen 8YSZ (8 Mol-% Yttrium-stabilisiertes Zirkoniumdioxid) Elektrolyts mit einer Dicke von ca. 300 µm und einem Durchmesser von 20 mm) der Firma Karafol hergestellt. Zunächst wurde eine dünne GDC-Schicht mit einer Dicke von ca. 4 µm im Siebdruckverfahren (M2-H, EKRA Siebdrucktechnologien) auf den Elektrolyten aufgebracht. Anschließend wurde PrLaCeOz-s-Elektrodenmaterial mit einer Dicke von ca. 10 bis 15 µm aufgebracht. Die Brennstoffelektrode und die GDC-Barriereschicht wurden bei 1400°C für 4 Stunden an der Luft co-gesintert. Eine dünne GDC-Barriereschicht mit einer Dicke von ca. 4 - 5 µm wurde im Siebdruckverfahren auf die andere Seite des Elektrolyten aufgebracht und zeitgleich bei den 1400°C gesintert.

Im nächsten Schritt wurde die LSCF-Luftelektrodenschicht mit einer Dicke von ca. 40 µm auf die GDC-Barriereschicht aufgebracht und bei 1080 °C für 3 h unter Luftatmosphäre gesintert. Schließlich wurde eine dünne Goldschicht mit einer Dicke von 5 µm als Stromsammelschicht auf die PrLaCeO_{2-δ} -Brennstoffelektrode gedruckt und bei 900 °C für 2 h unter Luftatmosphäre gesintert. Die aktive Fläche der einzelnen Zellen betrug 0,785 cm².

Es konnte so eine Festoxidzelle mit einer Pr_{0.05}La_{0.05}Ce_{0.9}O_{2-δ} Brennstoffelektrode und mit einer GDC Barriereschicht hergestellt werden.

Auf im Prinzip gleiche Weise wurden Festoxidzellen mit anderen Zusammensetzungen hergestellt und untersucht.

Es zeigen
- Figur 1:: Spannungs-Stromdichte Diagramm;
- Figur 2:: Spannungs-Zeit-Diagramm;
- Figur 3:: Aufbau einer SOC.

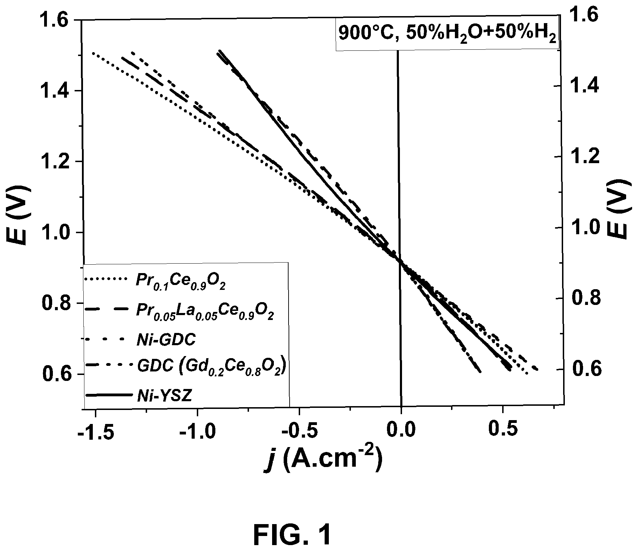

In der Figur 1 wird eine an die Elektroden der hergestellten SOCs angelegte Spannung und die resultierende Stromdichte in Abhängigkeit von der angelegten Spannung gezeigt.

### 1.3. Elektrochemische Messungen

Die hergestellten Einzelzellen wurden in einen keramischen Aufbau für die anschließenden elektrochemischen Messungen eingebaut und mithilfe eines Goldringes wurden die Luft- und Brennstoffelektrode gasdicht getrennt.

(11) Goldstromsammler wurden für die Kontaktierung der Elektroden benutzt. Nachdem die Zelle installiert wurde, wurde diese auf eine Betriebstemperatur von 900°C unter der Verwendung von Stickstoff auf der Brennstoffelektrodenseite und Luft auf der Luftelektrodenseite aufgeheizt. Nach dem Aufheizen wurden dann die jeweiligen Betriebsbedingungen der CO₂, CO- und Wasserdampfelektrolyse angefahren. Die elektrochemischen Messungen wurden mithilfe eines Ivium Vertex Potentiostaten der Firma Ivium Technologies BV, Eindhoven, Niederlande, ausgeführt.

Es konnte mithilfe von Messungen gezeigt werden, dass die Benutzung des Elektrodenmaterials eine höhere Leistung im Vergleich zu den herkömmlichen Ni-YSZ und Ni-GDC Materialien in der Wasserelektrolyse aufweist. Ein Beispiel für solche Messung wird in der Figur 1 gezeigt, die Strom Spannungs-Kennlinien zeigt. Aufgetragen ist eine gemessene Spannung E in [V] gegenüber der Stromdichte j in [A/cm²]. Beim Verbrauch von Energie, daher eine negativen Stromdichte in der Figur 1 auf der linken Seite, findet die Elektrolyse von Wasserdampf statt. Bei der Herstellung von elektrischer Energie, daher einer positiven Stromdichte in der Figur 1 auf der rechten Seite, findet der Brennstofzellenbetrieb mit Wasserstoff als Brenngas statt. Es wurden verschiedene Brennstoffelektroden in einem identischen Zelldesign miteinander verglichen, bei denen bei gleichem Aufbau und gleichen Dimensionen Brennstoffelektroden aus Pr_{0.1}Ce_{0.9}O_{2-δ}, Pr_{0.05}La_{0.05}Ce_{0.9}O_{2-δ}, Ni-GDC, GDC sowie Ni-YSZ gebildet worden sind. Der Elektrolyt ist bei allen Zellen aus 8YSZ und die Luftelektrode aus LSCF. Betrieben wurden die Festoxidzellen bei einer Temperatur von 900°C. Als Brennstoff wurde ein Gemisch aus Wasserdampf und Wasserstoff zugeführt. Die größte elektrische Leistung im Elektrolysebetrieb konnte mit der aus Pr_{0.1}Ce_{0.9}O_{2-δ} bestehenden Elektrode erzielt werden. Die zweithöchste mit der Pr_{0.05}La_{0.05}Ce_{0.9}O_{2-δ} Elektrode. Daher wurde bei einer Spannung von 1.5V die höchsten Beträge der Stromdichte j für die Pr_{0.1}Ce_{0.9}O_{2-δ} und Pr_{0.05}La_{0.05}Ce_{0.9}O_{2-δ} Elektroden gemessen.

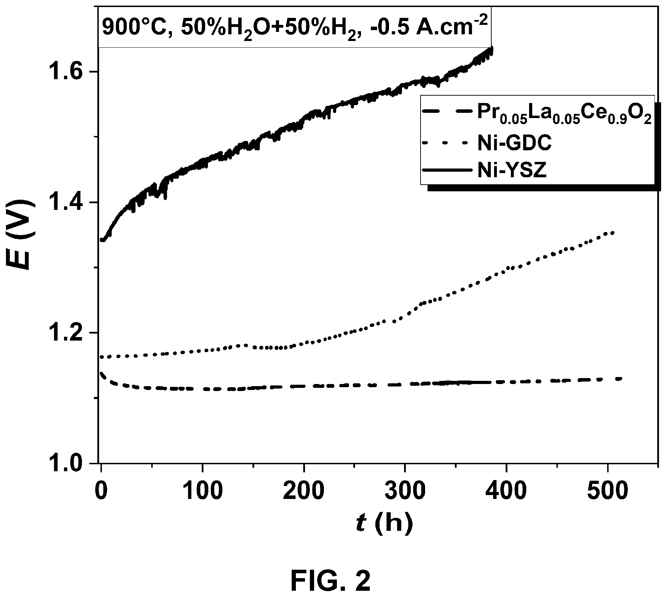

Es wurde außerdem ein konstanter Strom im Elektrolysebetrieb angelegt und die resultierende Spannung in Abhängigkeit von der Zeit gemessen. Beispiele für Ergebnisse werden in der Figur 2 gezeigt. In der Figur 2 werden Ergebnisse zu Stabilitätsuntersuchungen bei einer Temperatur von 900°C und einer Stromdicht von - 0.5 A/cm² gezeigt. Aufgetragen ist die Spannung E in [V] gegen die Zeit in [h]. Die Figur 2 verdeutlicht, dass die Brennstoffzelle mit der aus Pr_{0.05}La_{0.05}Ce_{0.9}O_{2-δ} bestehenden Brennstoffelektrode sich wesentlich langzeitstabiler verhalten hat im Vergleich zu aus Ni-YSZ sowie Ni-GDC bestehenden Brenngaselektroden.

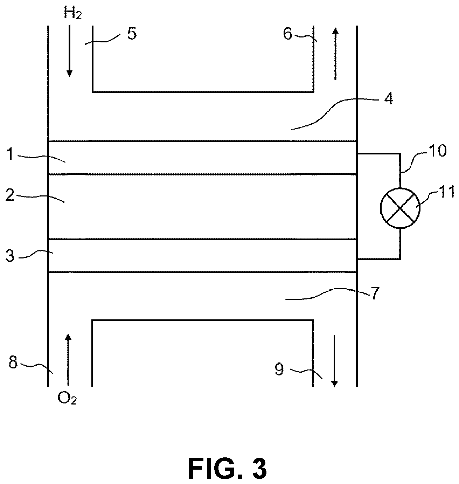

In der Figur 3 wird ein Beispiel für den Aufbau und den Betrieb einer Brennstoffzelle mit einer Anode 1, einem Elektrolyten 2 und einer Kathode 3 im Schnitt gezeigt. Der Elektrolyt 2 befindet sich zwischen der Anode 1 und der Kathode 3. An die Anode 1 grenzt ein Anodenraum 4. Der Anodenraum 4 weist einen Einlass 5 für ein Brenngas wie zum Beispiel Wasserstoff auf. Es gibt einen Auslass 6 für Anodenraum 4 entstandenen Wasserdampf sowie überschüssigen Wasserstoff. An die Kathode 3 grenzt ein Kathodenraum 7. Der Kathodenraum 7 weist einen Einlass 8 für ein Sauerstoff haltiges Gas auf. Der Kathodenraum 7 weist einen Auslass 9 für überschüssiges Gas auf. Ein elektrischer Leiter 10 kann einen elektrischen Verbraucher 11 mit der Anode 1 und der Kathode 3 verbinden, um den elektrischen Verbraucher 11 mit Strom versorgen zu können, der durch den Betrieb der Brennstoffzelle erzeugt wird.

Der in der Figur 3 gezeigte Aufbau kann auch als Elektrolyseur dienen, wenn der elektrische Verbraucher 11 gegen eine Gleichstromquelle ausgetauscht wird. Der Elektrode 1 kann dann Wasserdampf als Brennstoff zugeführt werden. Die Elektrode 1 ist dann eine Kathode. Die Elektrode 3 ist folglich dann die Anode.

An der Kathode entsteht während des Betriebs Wasserstoff. An der Anode entsteht während des Betriebs Sauerstoff.

## Patentansprüche

1. Festoxidzelle mit einem Elektrolyten (2), wobei auf gegenüberliegenden Seiten des Elektrolyten (2) gasdurchlässige Elektroden (1, 3) angebracht sind, **dadurch gekennzeichnet, dass** die Brennstoffelektrode (1) Ce₁₋ₓMₓO_{2-δ} mit M = Praseodym (Pr) und/oder Lanthan (La) und/oder Samarium (Sm) und/oder Neodym (Nd) umfasst.

2. Festoxidzelle nach dem vorhergehenden Anspruch, **dadurch gekennzeichnet, dass** x = 0 bis 0.3 ist.

3. Festoxidzelle nach Anspruch 1, **dadurch gekennzeichnet, dass** die Brennstoffelektrode (1) Pr_{0.1}Ce_{0.9}O_{2-δ} oder Pr_{0.3}Ce_{0.7}O_{2-δ} oder Pr_{0.05}La_{0.05}Ce_{0.9}O_{2-δ} umfasst.

4. Festoxidzelle nach einem der vorhergehenden Ansprüche, **dadurch gekennzeichnet, dass** in der Brennstoffelektrode Kobalt, Titanium, Platin oder Kupfer oder Nickel infiltriert sind oder die Brennstoffelektrode mit Platin oder Kupfer oder Nickel dotiert ist.

5. Festoxidzelle nach einem der vorhergehenden Ansprüche, **dadurch gekennzeichnet, dass** sich zwischen der Brennstoffelektrode (1) und dem Elektrolyten (2) eine Barriere befindet, wobei die Barriere dotiertes Ceroxid aufweist.

6. Festoxidzelle nach dem vorhergehenden Anspruch, **dadurch gekennzeichnet, dass** die Barriere mit Gadolinium dotiertes Ceroxid (GDC) oder mit Samariumoxid dotiertes Ceroxid (SmDC) aufweist.

7. Festoxidzelle nach dem vorhergehenden Anspruch, **dadurch gekennzeichnet, dass** die Barriere mit 10 Gew.-% bis 20 Gew.-% dotiert ist.

8. Festoxidzelle nach einem der vorhergehenden Ansprüche, **dadurch gekennzeichnet, dass** die Brennstoffelektrode (1) kein Nickel umfasst oder der Anteil an Nickel maximal 10 Gew.-% beträgt.

9. Festoxidzelle nach einem der vorhergehenden Ansprüche, **dadurch gekennzeichnet, dass** der Elektrolyt (2) aus einem gasdichten keramischen Werkstoff besteht, der Sauerstoffionen leiten kann und für Elektronen isolierend wirkt.

10. Festoxidzelle nach dem vorhergehenden Anspruch, **dadurch gekennzeichnet, dass** der Elektrolyt aus Yttrium-stabilisiertem Zirconiumoxid (YSZ) oder aus Strontium und Magnesium dotiertem Lanthangalliumoxid (LSGM) oder aus mit Gadolinium dotiertem Ceroxid (GDC) besteht.

11. Festoxidzelle nach einem der vorhergehenden Ansprüche, **dadurch gekennzeichnet, dass** die für Sauerstoff vorgesehene Elektrode (3) aus einem Perowskit-Verbundwerkstoff besteht.

12. Festoxidzelle nach einem der vorhergehenden Ansprüche, **dadurch gekennzeichnet, dass** die für Sauerstoff vorgesehene Elektrode (3) Lanthan-Strontium-Manganit umfasst und/oder Yttrium-stabilisiertes Zirkoniumoxid umfasst,
oder
Lanthan-Strontium-Kobaltit und/oder Lanthan-Strontium-Eisenumfasst umfasst oder
Samarium-Strontium-Kobaltit umfasst.

13. Festoxidzelle nach dem vorhergehenden Anspruch, **dadurch gekennzeichnet, dass** eine Trennschicht aus einer Cerverbindung zwischen dem Elektrolyten (2) und der für Sauerstoff vorgesehene Elektrode (3) vorhanden ist.

14. Verfahren für eine Festoxidzelle nach einem der vorhergehenden Ansprüche, **dadurch gekennzeichnet, dass** die Festoxidzelle bei einer Temperatur betrieben wird, die zwischen 600°C bis 900°C liegt.

15. Verfahren nach dem vorhergehenden Anspruch, **dadurch gekennzeichnet, dass** eine Elektrolyse durchgeführt wird.
